# EUROPÄISCHE PATENTANMELDUNG

(11) **EP 1 768 250 A2**
(43) Veröffentlichungstag der Anmeldung: **28.03.2007**
(21) Anmeldenummer: 06118945.2
(22) Anmeldetag: 15.08.2006
(51) Int. Cl.: H02P 6/18

(54) **Drehwinkelbestimmung eines Elektromotors**

(30) Priorität: 27.09.2005 DE 102005046052
(71) Anmelder: ROBERT BOSCH GMBH, 70442 Stuttgart (DE)
(72) Erfinder: Brosche, Thomas, 70195 Stuttgart (DE); Heimburger, Stefan, 77731 Willstaett-Legelshurst (DE); Krueger, Hartmut, 77830 Buehlertal (DE); Bitzer, Matthias, 70569 Stuttgart (DE); Fricker, David, 67500 Hagenau (FR)

(57) **Zusammenfassung**

Es wird ein Verfahren und eine Vorrichtung zur Bestimmung eines Schätzfehlers eines geschätzten Motordrehwinkels eines Elektromotors vorgeschlagen, der eine periodische Modulation eines Motorstromsignals und/oder eines Motorspannungssignals in Abhängigkeit von dem Motordrehwinkel zeigt. Bei dem vorgeschlagenen Verfahren und der vorgeschlagenen Vorrichtung findet ein Vergleich des geschätzten Motordrehwinkels mit einer Phasenlage der periodischen Modulation des Motorstromsignals und/oder des Motorspannungssignals statt.

## Beschreibung

Die vorliegende Erfindung betrifft ein Verfahren und eine Vorrichtung zur Bestimmung eines Schätzfehlers eines geschätzten Motordrehwinkels eines Elektromotors, der eine periodische Modulation eines Motorstromsignals und/oder eines Motorspannungssignals in Abhängigkeit von dem Motordrehwinkel zeigt.

### Stand der Technik

Zur Positionsbestimmung von mechanisch kommutierten Gleichstrommotoren werden in der Regel Hallsensoren eingesetzt. Andere Verfahren basieren auf einer Zählung der durch den mechanischen Kommutierungsvorgang im Motorstromsignal entstehenden Ripple. Solche Ripple-Counter-Verfahren sind z.B. in der DE 100 28 033, den DE 100 28 035 bis DE 100 28 041 und in der US 20030111996 beschrieben. Hierbei werden die kommutierungsbedingten Ripple durch Filterung (Hochpass, Tiefpass, Bandpass) vor der eigentlichen Zählung bestmöglich vom Stromsignal getrennt.

In der DE 197 29 238 C1 wird ein Verfahren vorgeschlagen, das mit Hilfe eines Motorzustandsmodells, eines Ripple-Detektors und einer nachgeschalteten Auswerteeinheit die Motordrehzahl und daraus die Motor- bzw. Aktuatorposition ermittelt. Die Drehzahl wird hierbei aus dem zeitlichen Abstand der erkannten Kommutierungsvorgänge bestimmt und mit der anhand des Motorzustandsmodells geschätzten Drehzahl verglichen. Die Auswerteeinheit ermittelt dann den jeweils wahrscheinlicheren Drehzahlwert und aus dem Drehzahlwert durch Integration über die Messzeit den Drehwinkel.

Aus der DE 199 25 327 A1 ist ein Verfahren zum elektronischen Überwachen und Steuern eines Prozesses zum Verstellen beweglicher Teile, insbesondere von Fenstern und Schiebedächern eines Kraftfahrzeugs, zur Gewährleistung eines Einklemmschutzes bekannt. Dieses weist mindestens die folgenden Schritte auf: Zuführen von für den Prozess charakteristischen Eingangs- und Ausgangsgrößen zu einer Erkennungseinrichtung, Auffinden und Optimieren von typischen Prozessgrößen eines in der Erkennungseinrichtung abgelegten und den Prozess beschreibenden Modells, Bewerten der typischen Parameter durch Vergleich mit in der Erkennungseinrichtung abgelegten Prozessgrößen, Ermitteln einer Korrekturgröße für den Prozess in Abhängigkeit des Vergleichs, und Beeinflussen des Prozesses durch Zuführen der ermittelten Korrekturgröße zu dem Prozess.

Desweiteren sind in der Regelungstechnik Beobachter, insbesondere Zustandsbeobachter vom Luenberger-Typ oder Kalman-Filter, bekannt, mit denen die Zustandsgrößen eines dynamischen Systems modellbasiert geschätzt werden können.

Es ist daher die der vorliegenden Erfindung zugrunde liegenden Aufgabe, die Drehwinkelposition eines Elektromotors, der eine periodische Modulation eines Motorstromsignals und/oder eines Motorspannungssignals in Abhängigkeit von dem Motordrehwinkel zeigt, anhand von Messwerten für das Motorstromsignal, d.h. einem Ankerstrom, und/oder das Motorspannungssignal, d.h. einer Klemmenspannung, zu bestimmen. Hierbei soll sich der Eindeutigkeitsbereich des Drehwinkels vorzugsweise über viele Motorumdrehungen erstrecken.

### Vorteile der Erfindung

Das erfindungsgemäße Verfahren zur Bestimmung eines Schätzfehlers eines geschätzten Motordrehwinkels eines Elektromotors, der eine periodische Modulation eines Motorstromsignals und/oder eines Motorspannungssignals, also eines Energieversorgungssignals des Motors, in Abhängigkeit von dem Motordrehwinkel zeigt, ist gekennzeichnet durch einen Vergleich des geschätzten Motordrehwinkels mit einer Phasenlage der periodischen Modulation des Motorstromsignals und/oder des Motorspannungssignals.

Die erfindungsgemäße Vorrichtung zur Bestimmung eines Schätzfehlers eines geschätzten Motordrehwinkels eines Elektromotors, der eine periodische Modulation eines Motorstromsignals und/oder eines Motorspannungssignals in Abhängigkeit von dem Motordrehwinkel zeigt, ist entsprechend durch eine Vergleichereinheit zum Vergleich des geschätzten Motordrehwinkels mit einer Phasenlage der periodischen Modulation des Motorstromsignals und/oder des Motorspannungssignals gekennzeichnet.

In bekannten Verfahren wird, wie zuvor beschrieben, der Motordrehwinkel durch Integration der Motordrehfrequenz bzw. Drehzahl berechnet. Dadurch entsteht ein Integrationsfehler. Kleinere Fehler in der Motordrehfrequenz ergeben nach einer Integration über längere Zeitintervalle sehr große Fehler in der absoluten Drehwinkelposition. Dieser Fehler tritt im erfindungsgemäßen Verfahren nicht auf, da hier die Drehwinkelposition direkt, d.h., nicht durch Integration der Motordrehfrequenz, bestimmt und anschließend durch Vergleich verifiziert wird.

Weiter sind erfindungsgemäß für die Drehwinkelbestimmung keine zusätzlichen Sensoren (z.B. Hallsensoren) einschließlich zu deren Anschluss benötigter Kabel, Stecker und Hardware für die Signalauswertung notwendig. Dadurch wird erfindungsgemäß eine Reduktion der Systemkosten ermöglicht.

Mit dem erfindungsgemäßen Verfahren und der erfindungsgemäßen Vorrichtung kann eine sehr hohe Stabilität und Robustheit erreicht werden, dies auch im Vergleich zu derzeit vorrangig eingesetzten Verfahren und Vorrichtungen mit Hallsensorik. Bei einer ausreichend hohen Genauigkeit des Motormodells ergibt sich im Gegensatz zu dem in der DE 197 29 238 C1 vorgeschlagenen Verfahren auch über eine sehr lange Betriebsdauer theoretisch keine relevante Erhöhung des Fehlers des geschätzten Motordrehwinkels. Für die vorzugsweise über ein Motormodell bevorzugt geschätzten Zustände Drehwinkel und Drehzahl, wie auch für andere über das Motormodell geschätzte Zustände, sind dabei innerhalb definierter Toleranzen Fehler zulässig, die keinen wesentlichen Einfluss auf den durch das vorgeschlagene sensorenlose Verfahren geschätzten Motordrehwinkel haben, da diese kompensiert werden können.

Wie zuvor schon erwähnt, wird der geschätzte Motordrehwinkel nach der Erfindung vorzugsweise mittels eines Motormodells aus dem Motorstromsignal und/oder dem Motorspannungssignal ermittelt. Das Motormodell ist weiter vorzugsweise in einen Beobachter integriert und wird über dessen Beobachterfunktion optimiert.

Erfindungsgemäß erfolgt der Vergleich des geschätzten Motordrehwinkels mit der Phasenlage der periodischen Modulation des Motorsignals und/oder des Motorspannungssignals vorzugsweise über eine Auswertung einer Differenz zwischen dem Motorstrom und einem durch das Motormodell geschätzten Strom und/oder über eine Auswertung einer Differenz zwischen der Motorspannung und einer durch das Motormodell geschätzten Spannung. Hierzu weist die erfindungsgemäße Vorrichtung vorzugsweise eine Subtrahierereinheit zur Bildung dieser Differenz(en) auf.

In einer ersten bevorzugten Weiterbildung dieses Vergleichs über eine Auswertung einer Differenz wird die Phasenlage der periodischen Modulation des Motorstromsignals und/oder des Motorspannungssignals ermittelt, indem zu Zeitpunkten, an denen ein durch die Differenz des Motorstroms mit dem durch das Motormodell geschätzten Motorstrom entstehendes Stromripplesignal und/oder an denen ein durch die Differenz der Motorspannung mit der durch das Motormodell geschätzten Motorspannung entstehendes Spannungsripplesignal detektiert wird, eine Winkeldifferenz zwischen dem geschätzten Motordrehwinkel und einem zu dem Kommutierungszeitpunkt erwartetem Sollwinkel ausgewertet wird. Hierzu weist die erfindungsgemäße Vorrichtung vorzugsweise eine Plausibilisierungseinheit zur Bestimmung dieser Zeitpunkte auf.

In einer alternativen zweiten bevorzugten Weiterbildung eines solchen Vergleichs über eine Auswertung einer Differenz wird die Phasenlage der periodischen Modulation des Motorstromsignals und/oder des Motorspannungssignals ermittelt, indem eine Winkeldifferenz zwischen einem durch ein Strommodell für den kommutierungsbedingten Ripple im Motorstromsginal und/oder im Motorspannungssignal, das anhand des geschätzten Motordrehwinkels bestimmt wird, erzeugten Signal und einem durch die Differenz des Motorstroms mit dem durch das Motormodell geschätzten Motorstrom entstehendes Stromripplesignal und/oder einem durch die Differenz der Motorspannung mit der durch das Motormodell geschätzten Motorspannung entstehendes Spannungsripplesignal ausgewertet wird. Hierzu weist die erfindungsgemäße Vorrichtung vorzugsweise eine Winkeldifferenz-Auswertungseinheit zur Auswertung der Winkeldifferenz auf.

In diesen beiden bevorzugten Weiterbildungen wird vorzugsweise die Winkeldifferenz aus einem kleinen Eindeutigkeitsbereich [0, 2π/a], mit a als Anzahl von pro Motorumdrehung auftretenden Ripplen im jeweiligen Signal, auf einen größeren Eindeutigkeitsbereich umgesetzt. Dieser größere Eindeutigkeitsbereich überdeckt die geforderte Anzahl von Motorumdrehungen für die jeweilige Anwendung. Hierzu weist die erfindungsgemäße Vorrichtung vorzugsweise eine Unwrap-Einheit auf.

Erfindungsgemäß wird die Differenz zwischen dem Motorstrom und dem durch das Motormodell geschätzten Motorstrom und/oder die Differenz zwischen der Motorspannung und der durch das Motormodell geschätzten Motorspannung vorzugsweise adaptiv bandpassgefiltert, bevor diese ausgewertet wird, wobei die Bandpassfilterung mit einer adaptiv verstellbaren Mittenfrequenz erfolgt. Weiter vorzugsweise erfolgt die Verstellung der Mittenfrequenz abhängig von einer von dem Motormodell geschätzten Umdrehungsfrequenz des Elektromotors. Hierzu weist die erfindungsgemäße Vorrichtung vorzugsweise ein adaptives Bandpassfilter auf.

Nach der Erfindung werden Parameter des Motormodells vorzugsweise anhand des Motorstromsignals und/oder des Motorspannungssignals geschätzt. Hierzu weist die erfindungsgemäße Vorrichtung vorzugsweise eine Parameter-Schätzeinheit auf.

Nach der Erfindung wird eine Umdrehungsfrequenz des Elektromotors anhand einer ungefilterten Differenz oder einer über ein Bandpassfilter gefilterten Differenz zwischen dem Motorstrom und einem durch das Motormodell geschätzten Strom und/oder zwischen der Motorspannung und einer durch das Motormodell geschätzten Spannung geschätzt.

Das erfindungsgemäße Verfahren und die erfindungsgemäße Vorrichtung sind vorzugsweise in Sitzsteuergeräten für Autositze oder in Steuergeräten für Schiebedächer, Fensterheber oder Klappensteller integriert.

### Zeichnung

Weitere Vorteile der Erfindung ergeben sich aus der folgenden Zeichnungsbeschreibung. In den Zeichnungen sind Ausführungsbeispiele der Erfindung beispielhaft dargestellt. Die Zeichnungen, die Beschreibung und die Ansprüche enthalten zahlreiche Merkmale in Kombination oder als bevorzugtes Ausführungsbeispiel der Erfindung bezeichnet. Der Fachmann wird die Merkmale zweckmäßigerweise auch einzeln betrachten und/oder zur sinnvollen weiteren Kombination zusammenfassen.

Es zeigen:
- Figur 1: einen grundsätzlichen Aufbau einer bevorzugten Ausführungsform der Vorrichtung des Verfahrens nach der Erfindung,
- Figur 2: eine erste bevorzugte Ausführungsform einer erfindungsgemäßen Fehlerwinkelbestimmung und -korrektur, und
- Figur 3: eine zweite bevorzugte Ausführungsform einer erfindungsgemäßen Fehlerwinkelbestimmung und -korrektur.

### Beschreibung der Ausführungsbeispiele

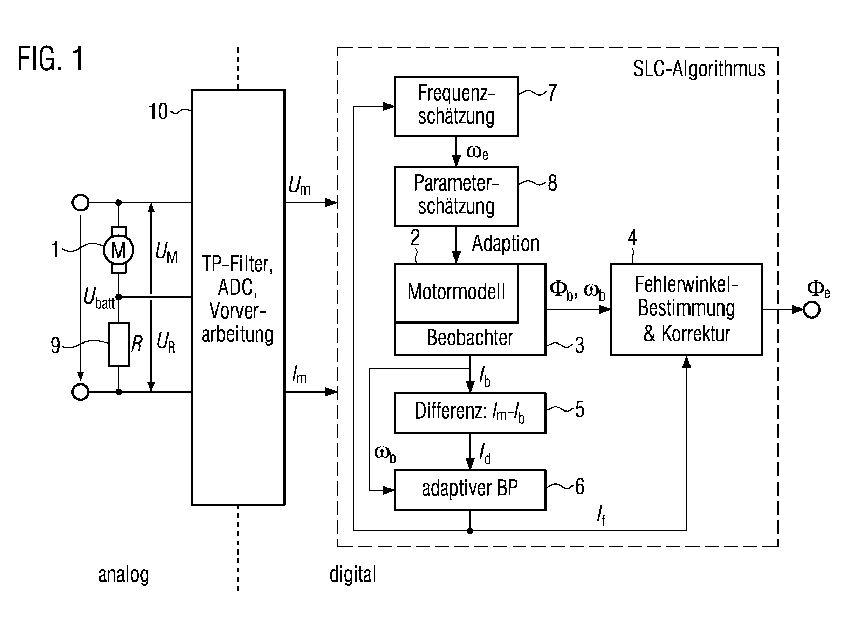

In Figur 1 ist der grundsätzliche Aufbau einer bevorzugten Ausführungsform des erfindungsgemäßen Systems dargestellt. Das System basiert auf der Messung der über den Motor abfallenden Spannung (Klemmenspannung) sowie des im Motor fließenden Stroms (Ankerstrom). Dazu werden am Motor 1 die Klemmenspannung U_{M} und die über einen zum Motor 1 in Reihe geschalteten Shunt-Widerstand 9 abfallende Spannung U_{R} gemessen. Die Versorgungsspannung für den Motor U_{batt} liegt über der Reihenschaltung aus Motor 1 und Shunt-Widerstand 9 an. Die analoge Klemmenspannung U_{M} und die über den Shunt-Widerstand 9 abfallende Spannung U_{R} werden in einer Erfassungseinheit 10 verstärkt, tiefpassgefiltert (Anti-Aliasing-Filter), digitalisiert (A/D-Wandlung) und in einer Vorverarbeitung in die digitalisierten Signale Klemmenspannung Um sowie Ankerstrom Im umgesetzt.

Nachfolgend werden dann die digitalisierten Signale Klemmenspannung Uₘ und Ankerstrom Iₘ mit Hilfe des erfindungsgemäßen Systems ausgewertet und hierdurch der gesuchte Motordrehwinkel Φₑ bestimmt. Das erfindungsgemäße System kann z.B. durch ein µC oder eine geeignete spezifische Hardware (FPGA, ASIC, etc.), wie auch einen diskreten Aufbau realisiert werden. In Figur 1 ist beispielshaft die Beschaltung des Motors bei Nutzung nur eines Shunt-Widerstands 9 ohne den für die Ansteuerung des Motors 1 notwendigen Schalter (Relais, Transistor, etc.) dargestellt. Eine Beschaltung mit Hilfe von zwei, jeweils an der unteren und der oberen Motorklemme angebrachten mit dem Motor 1 in Reihe geschalteten Shunt-Widerständen (nicht dargestellt), ist ebenfalls möglich, jedoch nicht wesentlich für das erfindungsgemäße System.

Die in der Figur 1 gezeigte bevorzugte Ausführungsform des erfindungsgemäßen Systems zur Bestimmung des gesuchten Motordrehwinkels Φₑ besteht im Wesentlichen aus einem Beobachter 3 und einer Fehlerwinkelbestimmung 4. Der Beobachter 3 beinhaltet ein Motormodell 2, dessen Parameter, z.B. Induktivität, Widerstand, Motorkonstante, Reibung und Getriebeelastizitäten, anhand der digitalisierten Motorspannung Uₘ und des digitalisierten Motorstroms Iₘ und ggf. einer geschätzten Kreisfrequenz ωₑ durch eine Parameterschätzung 8 ermittelt werden. Mit Hilfe des Beobachters 3 werden nun die Zustände des Motors 1, z.B. Strom I_{b}, Drehfrequenz ω_{b} und der Drehwinkel Φ_{b} und ggf. auch das Lastmoment M_{L} und weitere applikationsspezifische Zustände geschätzt. Bei ausreichend hoher Genauigkeit des Motormodells 2 bzw. der geschätzten Parameter sowie der Kenntnis aller Eingangsgrößen kann der Beobachter 3 auch als reiner Simulator, d.h., nur mit dem Motormodell 2 ohne aufgeschaltete Korrekturfunktion des Beobachters 3, betrieben werden. Da eine solche Schätzung der Zustände des Motors und weiterer applikationsspezifischer Zustände allgemein in der Fachliteratur, z.B.

O. Völlinger: Regelungstechnik: Einführung in die Methoden und ihrer Anwendung, 8. Auflage, Hüthig GmbH, Heidelberg, 1994, und H. Unbehauen, Regelungstechnik, Band 1: Klassische Verfahren zur Analyse und Synthese linearer kontinuierlicher Regelsysteme, Fuzzi-Regelsysteme, 12. Auflage, Wiweg, 2002, wie auch in der DE 197 29 238 C1 zu finden sind, werden diese hier nicht näher beschrieben.

Als Rückführgrößen für den Beobachter können hierbei eine oder mehrere der Zustandsgrößen digitalisierter (gemessener) Motorstrom Iₘ, geschätzte Frequenz ωₑ und geschätzter Winkel Φₑ verwendet werden.

Die Kommutierungsvorgänge sind dabei nicht im Motormodell 2 abgebildet bzw. der Beobachter 3 ist derart ausgelegt, dass diese in dem geschätzten Strom I_{b} möglichst nicht enthalten sind. Der mit Hilfe des Beobachters geschätzte Strom I_{b} wird in dieser Ausführungsform mittels einer Subtrahierereinheit 5 vom gemessenen digitaliserten Motorstrom Im abgezogen, wodurch eine Stromdifferenz I_{d} = Iₘ - I_{b} erhalten wird. Durch die Differenzbildung enthält man nun mit dem Differenzsignal I_{d} näherungsweise unabhängig von äußeren Spannungsschwankungen der Versorgungsspannung U_{bat} das gewünschte kommutierungsbedingte Ripplesignal. Das Differenzsignal I_{d} kann nun nachfolgend durch einen in seiner Mittenfrequenz ωₘ verstellbaren adaptiven Bandpass 6 mit der Bandbreite B gefiltert werden. Die Mittenfrequenz ωₘ des Bandpasses 6 wird vorzugsweise durch die vom Beobachter 3 geschätzte Frequenz ω_{b} vorgegeben als ωₘ = a · ω_{b}, wobei a gleich der Anzahl der pro Motorumdrehung auftretenden Ripple im Motorstromsignal I_{M} bzw. im digitalisierten Motorstromsignal Iₘ ist. Dadurch wird ein erheblicher Teil von Störungen, d.h., Schwankungen der Versorgungsspannung, Oberwellen, Digitalisierungsrauschen, etc., aus dem zu verarbeitenden Signal gefiltert. Durch die Bandpassfilterung wird somit die Detektionswahrscheinlichkeit des Ripplesignals bei schlechtem Signal-zu-Störsignal-Verhältnis erhöht und die Genauigkeit und Robustheit der nachfolgenden Winkelinterpolation und der Frequenzschätzung und damit des gesamten im erfindungsgemäßen System verwirklichten Verfahrens verbessert.

Mit Hilfe des gefilterten Stromdifferenzsignals I_{f} oder - alternativ bei Wegfall des Bandpassfilters 6 - des ungefilterten Stromdifferenzsignals I_{d} wird nun sowohl eine Frequenzschätzung mittels einer Frequenzschätzungseinheit 7 vorgenommen, die wiederum als Eingabesignal für die mittels der Parameter-Schätzeinheit 8 durchgeführten Parameterschätzung dient, als auch eine Fehlerwinkelbestimmung in der Vergleichereinheit 4 durchgeführt. Mit Hilfe der Fehlerwinkelbestimmung soll der Fehler ΔΦ_{b} = Φ_{b} - Φ des durch den Beobachter geschätzten Motordrehwinkels Φ_{b}, d.h., die Abweichung zwischen dem durch das Motormodell 2 geschätzten Motordrehwinkel Φ_{b}, und dem tatsächlichen Motordrehwinkel Φ ermittelt und nachfolgend korrigiert werden. Dazu wird die Phasenlage der durch den mechanischen Kommutierungsvorgang hervorgerufene Stromripple ausgewertet. Die Vergleichereinheit gibt dann den korrigierten geschätzten Winkel Φₑ aus.

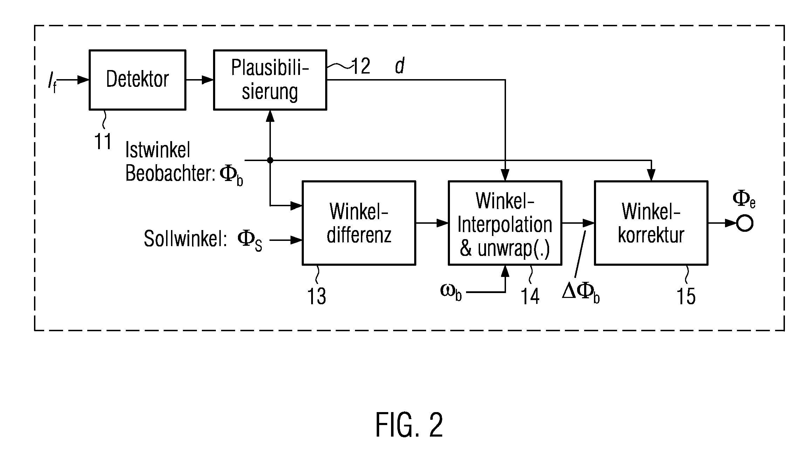

Figur 2 zeigt eine erste bevorzugte Ausführungsform der Vergleichereinheit 4. Hier werden die durch den Kommutierungsvorgang hervorgerufenen Stromripple im gefilterten Differenzsignal I_{f} oder alternativ direkt im Differenzsignal I_{d} (nicht dargestellt) detektiert und anhand des vom Beobachter 3 geschätzten Motordrehwinkels Φ_{b} plausibilisiert. D.h., in Abhängigkeit von dem vom Beobachter geschätzten Motordrehwinkel Φ_{b} wird in einer Plausibilisierungseinheit 12 ein von einem Detektor 11 erzeugtes Detektionssignal entweder unterdrückt oder ermöglicht. Zu dem Zeitpunkt, an denen die plausibilisierten Stromripple erkannt werden, nimmt das Detektionssignal d den Wert 1 an, wenn kein Ripplesignal erkannt wird, besitzt es den Wert 0. Durch die Plausibilisierung wird die Robustheit des Verfahrens gegenüber Störungen und dem Auftreten von mehreren Ripplen pro Kommutierungsvorgang erhöht. Die Plausibilisierung ist jedoch bei Verwendung des bandpassgefilterten Differenzsignals I_{f} nicht zwingend notwendig.

Zu den Zeitpunkten, an denen Ripplesignale detektiert werden, wird eine mittels einer Winkeldifferenz-Erzeugungseinheit 13 erzeugte Winkeldifferenz zwischen dem mit dem Beobachter geschätzten Winkel Φ_{b} und dem Sollwinkel Φₛ ausgewertet. Der Sollwinkel Φₛ ist der zu den Zeitpunkten der Kommutierungsvorgänge jeweils theoretisch erwartete Motorwinkel. Die Winkeldifferenz soll dabei bei einer definierten Phasenlage im Stromripplesignal ermittelt werden. Da die Winkeldifferenz hier jedoch nur zu den diskreten Messwerten-Abtastzeitpunkten vorliegt, wird diese nachfolgend in einer Winkelinterpolations- und Unwrap-Einheit 14 interpoliert. Mit Hilfe der Winkelinterpolation wird die Winkeldifferenz, die jeweils bei Vorhandensein einer definierten Phasenlage im Stromripplesignal (z.B. im Nulldurchgang oder Maximum) vorliegt, berechnet.

Da die über den Phasenvergleich und die Winkelinterpolation ermittelte Winkeldifferenz als Modulo 2π/a-Wert (Eindeutigkeitsbereich: [0, 2π/a]) vorliegt, muss diese noch auf den von der jeweiligen Anwendung benötigten größeren Werte- bzw. Eindeutigkeitsbereich umgesetzt werden. Hierzu wird in der Winkelinterpolations- und Unwrap-Einheit die an sich z.B. aus dem Programm Matlab bekannte Funktion "Unwrap" eingesetzt. Der dann vorliegenden eindeutige Winkelfehler ΔΦ_{b} des Beobachterwinkels Φ_{b} wird jetzt von einer Winkelkorrektureinheit 15 zur Korrektur des Beobachterwinkels Φ_{b} verwendet. Nach der Korrektur erhält man im Ergebnis den geschätzten und korrigierten Motordrehwinkel Φₑ. Alternativ kann die Funktion "Unwrap" auch nach der Winkelkorrektur angewandt werden (nicht dargestellt).

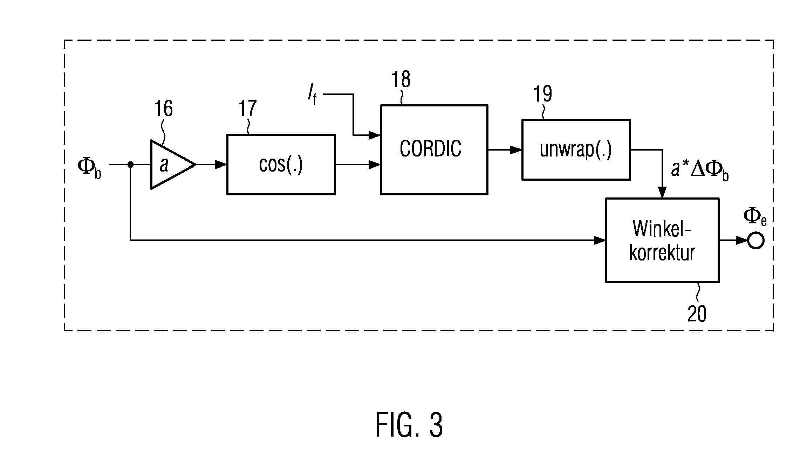

Figur 3 zeigt eine zweite bevorzugte Ausführungsform der Vergleichereinheit 4. Hier wird der durch den Beobachter 3 geschätzte Winkel Φ_{b} zur Erzeugung einer cosinusförmigen Schwingung eingesetzt. Diese durch eine Verstärkung des geschätzten Winkels Φ_{b} mit einem Verstärkungsfaktor a in einem Verstärker 16 und eine nachfolgende Signalverarbeitung in einem Signalgenerator 17 erzeugte cosinusförmige Schwingung ist somit ein Signalmodell für den kommutierungsbedingten Ripple im Motorstromsignal I_{M} bzw. im digitalisierten Motorstromsignal Iₘ. Nachfolgend wird - analog zur ersten bevorzugten Ausführungsform - die Phasenlage dieses Signals mit der Phasenlage des gefilterten oder ungefilterten Stromdifferenzsignals I_{f} oder I_{d} verglichen. Dies geschieht in einer Winkeldifferenz-Auswertungseinheit 18 z.B. mit Hilfe des CORDIC-Verfahrens. Da die über den Phasenvergleich ermittelte Winkeldifferenz a * Φ_{b} als Modulo 2n-Wert vorliegt, muss diese noch auf einen Eindeutigkeitsbereich größer [0, 2π] umgesetzt werden, wozu in einer Unwrap-Einheit 19 wiederum eine Unwrap-Funktion verwendet wird, die der gleichnamigen bekannten Matlab-Funktion entspricht. Der Phasenunterschied ΔΦ_{b} dient dann in einer Winkelkorrektureinheit 20 zur Korrektur des fehlerhaften Schätzwerts für den geschätzten Motordrehwinkel Φ_{b}. Für den Phasenvergleich sind anstelle des CORDIC-Verfahrens auch andere bekannte Verfahren möglich, z.B. die für die Realisierung von Phase-Locked-Loop (PLL) Schaltungen verwendeten Verfahren. Alternativ ist der Einsatz der "Unwrap-Funktion" auch nach der Winkelkorrektur möglich (hier nicht dargestellt).

Das erfindungsgemäß vorgeschlagene System einer sensorlosen Bestimmung des Motordrehwinkels ist nicht nur bei Gleichstrommotoren, sondern auch bei beliebigen anderen Motoren einsetzbar, die eine vergleichbare periodische Modulation des Strom- bzw. Spannungssignals in Abhängigkeit vom Motordrehwinkel zeigen.

## Patentansprüche

1. Verfahren zur Bestimmung eines Schätzfehlers eines geschätzten Motordrehwinkels (Φ_{b}) eines Elektromotors (1), der eine periodische Modulation eines Motorstromsignals (Iₘ) und/oder eines Motorspannungssignals (Uₘ) in Abhängigkeit von dem Motordrehwinkel zeigt, **gekennzeichnet durch** einen Vergleich des geschätzten Motordrehwinkels (Φ_{b}) mit einer Phasenlage der periodischen Modulation des Motorstromsignals (Iₘ) und/oder des Motorspannungssignals (Uₘ).

2. Verfahren nach Anspruch 1, **dadurch gekennzeichnet, dass** der geschätzte Motordrehwinkel (Φ_{b}) mittels eines Motormodells (2) aus dem Motorstromsignal (Iₘ) und/oder dem Motorspannungssignal (Uₘ) ermittelt wird.

3. Verfahren nach Anspruch 2, **dadurch gekennzeichnet, dass** das Motormodell (2) über eine Beobachterfunktion (3) optimiert wird.

4. Verfahren nach einem der vorstehenden Ansprüche, **dadurch gekennzeichnet, dass** der Vergleich des geschätzten Motordrehwinkels (Φ_{b}) mit der Phasenlage der periodischen Modulation des Motorstromsignals (Iₘ) und/oder des Motorspannungssignals (Uₘ) über eine Auswertung einer Differenz (I_{d}) zwischen dem Motorstrom (Iₘ) und einem durch das Motormodell geschätzten Strom (I_{b}) und/oder über eine Auswertung einer Differenz zwischen der Motorspannung und einer durch das Motormodell geschätzten Spannung erfolgt.

5. Verfahren nach Anspruch 4, **dadurch gekennzeichnet, dass** die Phasenlage der periodischen Modulation des Motorstromsignals (Iₘ) und/oder des Motorspannungssignals (Uₘ) ermittelt wird, indem zu Zeitpunkten, an denen ein durch die Differenz des Motorstroms (Iₘ) mit dem durch das Motormodell (2) geschätzten Motorstrom (I_{b}) entstehendes Stromripplesignal und/oder an denen ein durch die Differenz der Motorspannung mit der durch das Motormodell (2) geschätzten Motorspannung entstehendes Spannungsripplesignal detektiert wird, eine Winkeldifferenz zwischen dem geschätzten Motordrehwinkel (Φ_{b}) und einem zu den Kommutierungszeitpunkten erwartetem Sollwinkel (Φₛ) ausgewertet wird.

6. Verfahren nach Anspruch 4, **dadurch gekennzeichnet, dass** die Phasenlage der periodischen Modulation des Motorstromsignals (Iₘ) und/oder des Motorspannungssignals (Uₘ) ermittelt wird, indem eine Winkeldifferenz zwischen einem durch ein Signalmodell (16, 17) für den kommutierungsbedingten Ripple im Motorstromsignal (Iₘ) und/oder im Motorspannungssignal (Uₘ), das anhand des geschätzten Motordrehwinkels (Φ_{b}) bestimmt wird, erzeugten Signal und einem durch die Differenz des Motorstroms (Iₘ) mit dem durch das Motormodell (2) geschätzten Motorstrom (I_{b}) entstehendes Stromripplesignal und/oder einem durch die Differenz der Motorspannung mit der durch das Motormodell (2) geschätzten Motorspannung entstehendes Spannungsripplesignal ausgewertet wird.

7. Verfahren nach Anspruch 5 oder 6, **gekennzeichnet durch** eine Umsetzung der Winkeldifferenz aus einem Eindeutigkeitsbereich [0, 2π/a], mit a als Anzahl von pro Motorumdrehung auftretenden Ripplen im Signal, auf einen größeren Eindeutigkeitsbereich.

8. Verfahren nach einem der Ansprüche 4 bis 7, **gekennzeichnet durch** eine adaptive Bandpassfilterung (6) der Differenz zwischen dem Motorstrom (Iₘ) und dem **durch** das Motormodell (2) geschätzten Motorstrom (I_{b}) und/oder der Differenz zwischen der Motorspannung (Uₘ) und der **durch** das Motormodell geschätzten Motorspannung, bevor diese ausgewertet wird, wobei die Bandpassfilterung mit einer adaptiv verstellbaren Mittenfrequenz erfolgt.

9. Verfahren nach Anspruch 8, **gekennzeichnet durch** eine Verstellung der Mittenfrequenz abhängig von einer von dem Motormodell (2) geschätzten Umdrehungsfrequenz (ω_{b}) des Elektromotors (1).

10. Verfahren nach einem der vorstehenden Ansprüche, **gekennzeichnet durch** eine Schätzung von Parametern des Motormodells (2) anhand des Motorstromsignals (Iₘ) und/oder des Motorspannungssignals (Uₘ).

11. Verfahren nach einem der vorstehenden Ansprüche, **dadurch gekennzeichnet, dass** eine Umdrehungsfrequenz (ω_{b}) des Elektromotors (1) anhand einer ungefilterten Differenz (I_{d}) oder einer über ein Bandpassfilter gefilterten Differenz (I_{f}) zwischen dem Motorstrom (Iₘ) und einem durch das Motormodell geschätzten Strom (I_{b}) und/oder zwischen der Motorspannung und einer durch das Motormodell geschätzten Spannung geschätzt wird.

12. Verfahren nach einem der vorstehenden Ansprüche, **dadurch gekennzeichnet, dass** es in einem Sitzsteuergerät für Autositze und/oder in einem Steuergerät für Schiebedächer, Fensterheber oder Klappensteller eingesetzt wird.

13. Vorrichtung zur Bestimmung eines Schätzfehlers eines geschätzten Motordrehwinkels eines Elektromotors (1), der eine periodische Modulation eines Motorstromsignals (Iₘ) und/oder eines Motorspannungssignals (Uₘ) in Abhängigkeit von dem Motordrehwinkel (Φ_{b}) zeigt, **gekennzeichnet durch** eine Vergleichereinheit (4) zum Vergleich des geschätzten Motordrehwinkels (Φ_{b}) mit einer Phasenlage der periodischen Modulation des Motorstromsignals (Iₘ) und/oder des Motorspannungssignals (Uₘ).

14. Vorrichtung nach Anspruch 13, **gekennzeichnet durch** ein Motormodell (2) zur Ermittlung des geschätzten Motordrehwinkels (Φ_{b}) aus dem Motorstromsignal (Iₘ) und/oder dem Motorspannungssignal (Uₘ).

15. Vorrichtung nach Anspruch 14, **gekennzeichnet durch** einen Beobachter (3), in den das Motormodell (2) zu dessen Optimierung integriert ist.

16. Vorrichtung nach einem der Ansprüche 13 bis 15, **gekennzeichnet durch** eine Subtrahierereinheit (5) zur Bildung einer Differenz zwischen dem Motorstrom (Iₘ) und einem **durch** das Motormodell (2) geschätzten Motorstrom (I_{b}) und/oder einer Differenz zwischen der Motorspannung und einer **durch** das Motormodell (2) geschätzten Motorspannung.

17. Vorrichtung nach Anspruch 16, **gekennzeichnet durch** eine Plausibilisierungseinheit (12) zur Bestimmung von Zeitpunkten, an denen ein **durch** die von der Subtrahierereinheit (5) gebildete Differenz entstehendes Stromripplesignal und/oder Spannungsripplesignal detektiert wird.

18. Vorrichtung nach Anspruche 16, **gekennzeichnet durch** eine Winkeldifferenz-Auswertungseinheit (18) zur Auswertung einer Winkeldifferenz zwischen einem **durch** ein Signalmodell (16, 17) für den kommutierungsbedingten Ripple im Motorstromsignal (Iₘ) und/oder im Motorspannungssigal (Uₘ), das anhand des Motordrehwinkels (Φ_{b}) bestimmt wird, erzeugten Signal und der **durch** die Subtrahiereinheit (5) erzeugten Differenz.

19. Vorrichtung nach Anspruch 17 oder 18, **gekennzeichnet durch** eine Unwrap-Einheit (14, 19) zur Umsetzung der Winkeldifferenz aus einem Eindeutigkeitsbereich [0, 2π/a], mit a als Anzahl von pro Motorumdrehung auftretenden Ripplen im Signal, auf einen größeren Eindeutigkeitsbereich.

20. Vorrichtung nach einem der Ansprüche 16 bis 19, **gekennzeichnet durch** ein adaptives Bandpassfilter (6) zur Bandpassfilterung der von der Subtrahierereinheit (5) gebildeten Differenz bevor diese ausgewertet wird, wobei die Bandpassfilterung mit einer adaptiv verstellbaren Mittenfrequenz erfolgt.

21. Vorrichtung nach einem der vorstehenden Ansprüche 13 bis 20, **gekennzeichnet durch** eine Parameter-Schätzeinheit (8) zur Schätzung von Parametern des Motormodells (2) anhand des Motorstromsignals (Iₘ) und/oder des Motorspannungssignals (Uₘ).

22. Vorrichtung nach einem der vorstehenden Ansprüche 13 bis 21, **dadurch gekennzeichnet, dass** eine Umdrehungsfrequenz (ω_{b}) des Elektromotors (1) anhand einer ungefilterten Differenz (I_{d}) oder einer über ein Bandpassfilter gefilterten Differenz (I_{f}) zwischen dem Motorstrom (Iₘ) und einem durch das Motormodell geschätzten Strom (I_{b}) und/oder zwischen der Motorspannung und einer durch das Motormodell geschätzten Spannung geschätzt wird.

23. Vorrichtung nach einem der vorstehenden Ansprüche 13 bis 22, **dadurch gekennzeichnet, dass** sie in ein Sitzsteuergerät für Autositze und/oder in ein Steuergerät für Schiebedächer, Fensterheber oder Klappensteller integriert ist.
